(19) Europäisches Patentamt
European Patent Office
Office européen des brevets

(11) EP 3 890 969 B1

(12) **EUROPEAN PATENT SPECIFICATION**

(45) Date of publication and mention of the grant of the patent:
**14.02.2024 Bulletin 2024/07**

(21) Application number: **19801601.6**

(22) Date of filing: **18.11.2019**

(51) International Patent Classification (IPC):
***B32B 27/08*** *(2006.01)* ***B32B 27/30*** *(2006.01)*
***B32B 27/32*** *(2006.01)* ***C08J 5/18*** *(2006.01)*
***C08L 23/10*** *(2006.01)*

(52) Cooperative Patent Classification (CPC):
**B32B 27/08; B32B 27/30; B32B 27/32; C08J 5/18; C08L 23/10;** B32B 2250/03; B32B 2250/24; B32B 2250/242; B32B 2250/246; B32B 2264/02; B32B 2270/00; B32B 2307/514; B32B 2307/518; B32B 2307/536; B32B 2307/558; (Cont.)

(86) International application number:
**PCT/EP2019/081638**

(87) International publication number:
**WO 2020/114760 (11.06.2020 Gazette 2020/24)**

(54) **BOPP MULTILAYER FILM**

MEHRSCHICHTIGE BOPP-FOLIE

FILM BOPP MULTICOUCHES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.12.2018 EP 18210379**

(43) Date of publication of application:
**13.10.2021 Bulletin 2021/41**

(73) Proprietor: **Basell Poliolefine Italia S.r.l.**
**20121 Milano (IT)**

(72) Inventors:
- **FELISATI, Andrea**
  **44122 Ferrara (IT)**
- **IZZI, Marco**
  **60325 Frankfurt/M (DE)**
- **MASSARI, Paola**
  **44121 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**WO-A1-01/60607**
**WO-A1-2005/035598**
**WO-A1-2006/065664**
**WO-A1-2015/091829**
**WO-A1-2018/069127**
**WO-A1-2018/104092**
**WO-A1-2019/052821**
**US-A1- 2004 166 351**
**US-A1- 2009 305 069**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 890 969 B1

(52) Cooperative Patent Classification (CPC): (Cont.)
B32B 2439/70

## Description

FIELD OF THE INVENTION

The present disclosure relates to a biaxially oriented polypropylene (BOPP) multilayer film having an optimum balance of properties made by three or more layers of the same propylene composition.

BACKGROUND OF THE INVENTION

As is known, the isotactic polypropylene is endowed with an exceptional combination of excellent properties which render it suitable for a very great number of uses. In order to improve said properties into the propylene stereoregular homopolymerization process have been introduced one or more copolymerization steps or one or more monomer have been introduced in the homopolymer matrix. WO2006065664 relates to films comprising a heterogeneous blend.

WO 05/014713 relates to a heterophasic polyolefin composition comprising (percent by weight):

1) 65-95% of a crystalline propylene polymer selected from propylene homopolymer and random polymer of propylene with 0.1-10% of an alpha -olefin selected from ethylene, a $C_4$-$C_{10}$ alpha-olefin and a mixture thereof, the said polymer being insoluble in xylene at ambient temperature in an amount over 85% and having a polydispersity index ranging from 4 to 13, preferably 4.5 to 12, more preferably 5 to 9, and an intrinsic viscosity value over 2.2 dl/g, preferably 2.2 to 4.5 dl/g; and
2) 5-35% of an elastomeric olefin polymer of ethylene with a $C_3$-$C_{10}$ alpha -olefin and optionally a diene, having an ethylene content ranging from 15 to 85% and an intrinsic viscosity value of at least 1.4 dl/g, preferably from 2.5 to 5 dl/g.

SUMMARY OF THE INVENTION

The applicant found that it is possible to achieve biaxially oriented polypropylene (BOPP) multilayer films having improved properties especially in term of puncture properties by using a particular class of propylene polymer composition.

The object of the present disclosure is a biaxially oriented polypropylene (BOPP) multilayer film having at least three layers wherein each layer comprises the same nucleated propylene polymer composition; said propylene polymer composition having:

A) from 77 wt% to 91 wt%, of a propylene homopolymer having a fraction insoluble in xylene at 25 °C higher than 95 %;
B) from 9 wt % to 23 wt%, of a copolymer of propylene with from 28.0 wt% to 42.0 wt% of ethylene derived units;

the composition having an intrinsic viscosity of the fraction soluble in xylene at 25 °C comprised between 1.0 dl/g and 1.9 dl/g, a fraction soluble in xylene at 25 °C comprised between 9.0 wt% and 21.0 wt%, a total melt flow rate (Melt Flow Rate according to ISO 1133, condition L, i.e. 230°C and 2.16 kg load) comprised between 1.5 and 5 g/10 min and the value of the relation (I):

$$22.5+0.2*MFR-1.2*Xs+0.2*IV \qquad (I)$$

is higher than 5.9; wherein
MFR is the melt flow rate of the nucleated composition (Melt Flow Rate according to ISO 1133, condition L, i.e. 230°C and 2.16 kg load);
IV is the intrinsic viscosity of the fraction soluble in xylene at 25 °C; and
Xs is the fraction soluble in xylene at 25°C;
wherein the amount of A+B is equal to 100wt%
and wherein the nucleated agent is selected from the group consisting of aromatic or aliphatic carboxylic acids, aromatic metal phosphates, sorbitol derivatives and talc and wherein the amount of nucleating agent ranges from 300 ppm to 5000 ppm with respect to the total composition.

DETAILED DESCRIPTION OF THE INVENTION

The object of the present disclosure is a biaxially oriented polypropylene (BOPP) multilayer film having at least three layers wherein each layer comprises the same nucleated propylene polymer composition; said propylene polymer composition having:

A) from 77 wt% to 91 wt%, preferably from 80 wt% to 90 wt%, more preferably from 83 wt% to 89 wt% of a propylene homopolymer having a fraction insoluble in xylene at 25 °C, higher than 95 %, preferably higher than 96 wt%;
B) from 9 wt % to 23 wt%, preferably from 10 wt% to 20 wt%, more preferably from 11 wt% to 17 wt% of a copolymer of propylene with from 28.0wt% to 42.0 wt%, preferably from 31.0 wt% to 39.0 wt%; more preferably from 32.0 wt% to 38.0 wt% of ethylene derived units; the composition having an intrinsic viscosity of the fraction soluble in xylene at 25 °C comprised between 1.0 dl/g and 1.9 dl/g; preferably from 1.2 dl/g to 1.7 dl/g a fraction soluble in xylene at 25 °C comprised between 9.0 wt% and 21.0 wt%; preferably comprised between 11.0 wt% and 18.0 wt%; more preferably comprised between 12.0 wt% and 16.0 wt%; a total melt flow rate (Melt Flow Rate according to ISO 1133, condition L, i.e. 230°C and 2.16 kg load) comprised between 1.5 and 5 g/10 min; preferably between 2.5 and 4.5 g/10 min and the value of the relation (I):

$$22.5+0.2*MFR-1.2*Xs+0.2*IV \quad (I)$$

is higher than 5.9; preferably is comprised between 6.1 and 7.3; more preferably comprised between 6.4 and 7.2; even more preferably comprised between 6.6 and 7.0;
wherein
MFR is the melt flow rate of the nucleated composition (Melt Flow Rate according to ISO 1133, condition L, i.e. 230°C and 2.16 kg load);
IV is the intrinsic viscosity of the fraction soluble in xylene at 25 °C; and
Xs is the fraction soluble in xylene at 25°C;
wherein the amount of A+B is equal to 100wt%
and wherein the nucleating agent is selected from the group consisting of aromatic or aliphatic carboxylic acids, aromatic metal phosphates, sorbitol derivatives and talc; preferably the nucleated agent is selected from the group consisting of dibenzylidene sorbitol compounds (such as unsubstituted dibenzylidene sorbitol (DBS), p-methyldibenzylidene sorbitol (MDBS), 1,3-0-2, 4-bis (3, 4-dimethylbenzylidene) sorbitol (DMDBS) available from Milliken under the trade name Millad 3988)), sodium benzoate, talc, metal salts of cyclic phosphoric esters (such as sodium 2, 2'-methylene-bis- (4, 6-di-tert-butylphenyl) phosphate (from Asahi Denka Kogyo K. K., known as NA-11), and cyclic bis-phenolphosphates (such as NA-21, also available from Asahi Denka)), metal salts (such as calcium) of hexahydrophthalic acid, and the unsaturated compound of disodium bicyclo [2.2. 1] heptene dicarboxylate, known as HPN-68 available from Milliken. Dibenzylidene sorbitol derivatives are the most preferred; 1,3-0-2, 4-bis (3, 4-dimethylbenzylidene) sorbitol (DMDBS) available from Milliken under the trade name Millad 3988 is the most preferred.;
and wherein the amount of nucleating agent ranges from 300 ppm to 5000 ppm; preferably from 500 ppm to 3000 ppm; more preferably from 900 ppm to 1500 ppm with respect to the total composition.

From the above definitions it is evident that the term "copolymer" is limited to polymers containing only propylene and ethylene.

The BOPP multilayer films of the present disclosure are characterized by having at least three layers each layer comprising the same propylene polymer composition. Each layer contains at least 90 wt%; preferably 95 wt% more preferably 98 wt%; even more preferably 99 wt% of the propylene polymer composition above described. The remaining components being additives used in the art such as antioxidants, slip agents antifog agents and thermo stabilizers.

The combination and number of layers of the multilayer structures described herein are not limited. For instance, the multilayer structure can comprise 3-11 layers or more, including 3-9 layers, 3-7 layers, and 3-5 layers.

The biaxially oriented polypropylene (BOPP) multilayer film of the present disclosure shows a high value of tensile modulus, tear resistance and puncture resistance.

Preferably the multilayer film of the present disclosure has a tensile modulus higher than 1550 MPa, preferably comprised between 1550MPa and 2200 MPa.

Preferably the multilayer film of the present disclosure has a tear resistance measured in the machine direction higher than 2.0N; more preferably comprised between 2.3N and 6.0N.

Preferably the multilayer film of the present disclosure has a puncture resistance max force higher than 25N; preferably comprised between 30N and 70N.

The propylene polymer compositions of the present disclosure is prepared by sequential polymerization in at least two stages, with each subsequent polymerization stage being conducted in the presence of the polymeric material formed in the immediately preceding polymerization reaction, wherein the polymer (A) is normally prepared in at least one first polymerization stage and the copolymer (B) is normally prepared in at least one second polymerization stage. The nucleated agent is then added during the compounding process together with the other additives commonly used

in the art.

Preferably, each polymerization stage is carried out in presence of a highly stereospecific heterogeneous Ziegler-Natta catalyst. The Ziegler-Natta catalysts suitable for producing the propylene polymer compositions of the disclosure comprise a solid catalyst component comprising at least one titanium compound having at least one titanium-halogen bond and at least an electron-donor compound (internal donor), both supported on magnesium chloride. The Ziegler-Natta catalysts systems further comprise an organo-aluminum compound as essential co-catalyst and optionally an external electron-donor compound.

Suitable catalysts systems are described in the European patents EP45977, EP361494, EP728769, EP 1272533 and in the international patent application WO00163261.

Preferably, the solid catalyst component comprises Mg, Ti, halogen and an electron donor selected from succinates of formula (I):

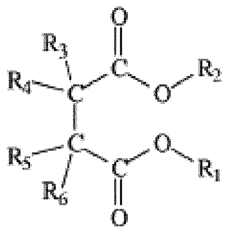

(I)

wherein the radicals $R^1$ and $R^2$, equal to or different from each other, are a $C_1$-$C_{20}$ linear or branched alkyl, alkenyl, cycloalkyl, aryl, arylalkyl or alkylaryl group, optionally containing heteroatoms belonging to groups 15-17 of the periodic table; the radicals $R^3$ to $R^6$ equal to or different from each other, are hydrogen or a $C_1$-$C_2$ linear or branched alkyl, alkenyl, cycloalkyl, aryl, arylalkyl or alkylaryl group, optionally containing heteroatoms, and the radicals $R^3$ to $R^6$ which are joined to the same carbon atom can be linked together to form a cycle.

$R^1$ and $R^2$ are preferably $C_1$-$C_8$ alkyl, cycloalkyl, aryl, arylalkyl and alkylaryl groups.

Particularly preferred are the compounds in which $R^1$ and $R^2$ are selected from primary alkyls and in particular branched primary alkyls. Examples of suitable $R^1$ and $R^2$ groups are methyl, ethyl, n-propyl, n-butyl, isobutyl, neopentyl, 2-ethylhexyl. Particularly preferred are ethyl, isobutyl, and neopentyl.

One of the preferred groups of compounds described by the formula (I) is that in which $R^3$ to $R^5$ are hydrogen and $R^6$ is a branched alkyl, cycloalkyl, aryl, arylalkyl and alkylaryl radical having from 3 to 10 carbon atoms. Another preferred group of compounds within those of formula (I) is that in which at least two radicals from $R^3$ to $R^6$ are different from hydrogen and are selected from $C_1$-$C_{20}$ linear or branched alkyl, alkenyl, cycloalkyl, aryl, arylalkyl or alkylaryl group, optionally containing heteroatoms belonging to groups.

Particularly preferred are the compounds in which the two radicals different from hydrogen are linked to the same carbon atom. Furthermore, also the compounds in which at least two radicals different from hydrogen are linked to different carbon atoms, that is $R^3$ and $R^5$ or $R^4$ and $R^6$ are particularly preferred.

According to a preferred method, the solid catalyst component can be prepared by reacting a titanium compound of formula $Ti(OR)_{n-y}X_y$ where n is the valence of titanium and y is a number between 1 and n, preferably TiC4, with a magnesium chloride deriving from an adduct of formula $MgCl_2{\cdot}pROH$, where p is a number between 0.1 and 6, preferably from 2 to 3.5, and R is a hydrocarbon radical having 1-18 carbon atoms. The adduct can be suitably prepared in spherical form by mixing alcohol and magnesium chloride in the presence of an inert hydrocarbon immiscible with the adduct, operating under stirring conditions at the melting temperature of the adduct (100-130 "C). Then, the emulsion is quickly quenched, thereby causing the solidification of the adduct in form of spherical particles. Examples of spherical adducts prepared according to this procedure are described in US 4,399,054 and US 4,469,648. The so obtained adduct can be directly reacted with the Ti compound or it can be previously subjected to thermal controlled dealcoholation (80-130 °C) so as to obtain an adduct in which the number of moles of alcohol is generally lower than 3, preferably between 0.1 and 2.5. The reaction with the Ti compound can be carried out by suspending the adduct (dealcoholated or as such) in cold $TiCl_4$ (generally 0 °C); the mixture is heated up to 80-130 °C and kept at this temperature for 0.5-2 hours. The treatment with $TiCl_4$ can be carried out one or more times. The internal donor can be added during the treatment with $TiCl_4$ and the treatment with the electron donor compound can be repeated one or more times. Generally, the succinate of formula (I) is used in molar ratio with respect to the $MgCl_2$ of from 0.01 to 1 preferably from 0.05 to 0.5. The preparation of catalyst components in spherical form is described for example in European patent application EP-A-395083 and in the International patent application WO98144001. The solid catalyst components obtained according to the above method show a surface area (by B.E.T. method) generally between 20 and 500 $m^2/g$ and preferably between 50 and 400 m2/g, and a total porosity (by B.E.T. method) higher than 0.2 cm3/g preferably between 0.2 and 0.6 cm3/g. The porosity (Hg method) due to pores with radius up to 10.000A generally ranges from 0.3 to 1.5 cm3/g, preferably from

0.45 to 1 cm3/g.

The organo-aluminum compound is preferably an alkyl-Al selected from the trialkyl aluminum compounds such as for example triethylaluminum, triisobutylaluminum, tri-n-butylaluminum, tri-n-hexylaluminum, tri-n-octylaluminum. It is also possible to use mixtures of trialkylaluminum's with alkylaluminum halides, alkylaluminum hydrides or alkylaluminum sesquichlorides such as $AlEt_2Cl$ and $Al_2Et_3Cl_3$.

Preferred external electron-donor compounds include silicon compounds, ethers, esters such as ethyl 4-ethoxybenzoate, amines, heterocyclic compounds and particularly 2,2,6,6-tetramethyl piperidine, ketones and the 1,3-diethers. Another class of preferred external donor compounds is that of silicon compounds of formula $R_a{}^5R_b{}^6Si(OR^7)_c$ where a and b are integer from 0 to 2, c is an integer from 1 to 3 and the sum (a+b+c) is 4; $R^5$, $R^6$, and $R^7$, are alkyl, cycloalkyl or aryl radicals with 1-18 carbon atoms optionally containing heteroatoms. Particularly preferred are methylcyclohexyldimethoxysilane, diphenyldimethoxysilane, methyl-t-butyldimethoxysilane, dicyclopentyldimethoxysilane, 2-ethylpiperidinyl-2-t-butyldimethoxysilane and 1,1,1 ,trifluoropropyl-2-ethylpiperidinyl-dimethoxysilane and 1,1,1 ,trifluoropropylmetildimethoxysilane. The external electron donor compound is used in such an amount to give a molar ratio between the organo-aluminum compound and said electron donor compound of from 0.1 to 500.

The polymerization process can be carried out in gas phase and/or in liquid phase, in continuous or batch reactors, such as fluidized bed or slurry reactors. For example, it is possible to carry out the polymerization of the propylene polymer (A) in liquid phase, using liquid propylene as diluent, while the copolymerization stage to obtain the propylene copolymer fraction (B) is carried out in gas phase, without intermediate stages except for the partial degassing of the monomers. Alternatively, all the sequential polymerization stages can be carried out in gas phase. The reaction time, temperature and pressure of the polymerization steps are not critical, however the temperature for the preparation of fraction (A) and (B), that can be the same or different, is usually from 50°C to 120°C. The polymerization pressure preferably ranges from 0.5 to 30 MPa if the polymerization is carried out in gas-phase. The catalytic system can be pre-contacted (prepolymerized) with small amounts of olefins. The molecular weight of the propylene polymer composition is regulated by using known regulators, such as hydrogen.

In the second stage of the particularly preferred polymerization process, the propylene/ethylene copolymer (B) is produced in a conventional fluidized-bed gas-phase reactor in the presence of the polymeric material and the catalyst system coming from the preceding polymerization step. The nucleated propylene polymer compositions of the present disclosure may further comprise additives commonly employed in the polyolefin field, such as antioxidants, light stabilizers, antiacids, colorants and fillers.

The nucleated propylene polymer compositions of the present disclosure further presents a X-ray spectrum having a degree of crystallinity lower than 60 % measured on rotating compression molded DMTA plaques.

The following examples are given to illustrate and not to limit the present disclosure

EXAMPLES

The data of the propylene polymer materials were obtained according to the following methods:

**Xylene-soluble faction at 25°C**

The Xylene Soluble fraction was measured according to ISO 16152, 2005, but with the following deviations (between brackets what prescribed by the ISO 16152)

The solution volume is 250 ml (200 ml)

During the precipitation stage at 25°C for 30 min, the solution, for the final 10 minutes, is kept under agitation by a magnetic stirrer (30 min, without any stirring at all)

The final drying step is done under vacuum at 70°C (100 °C)

The content of said xylene-soluble fraction is expressed as a percentage of the original 2.5 grams and then, by difference (complementary to 100), the xylene insoluble %

**Ethylene (C2) content**

**$^{13}$C NMR of propylene/ethylene copolymers**

$^{13}$C NMR spectra were acquired on a Bruker AV-600 spectrometer equipped with cryoprobe, operating at 160.91 MHz in the Fourier transform mode at 120°C.

The peak of the $S_{\beta\beta}$ carbon (nomenclature according to "Monomer Sequence Distribution in Ethylene-Propylene Rubber Measured by 13C NMR. 3. Use of Reaction Probability Mode" C. J. Carman, R. A. Harrington and C. E. Wilkes, Macromolecules, 1977, 10, 536) was used as internal reference at 29.9 ppm. The samples were dissolved in 1,1,2,2-tetrachloroethane-d2 at 120°C with a 8 % wt/v concentration. Each spectrum was acquired with a 90° pulse, 15 seconds of delay between pulses and CPD to remove 1H-13C coupling. 512 transients were stored in 32K data points using a

spectral window of 9000 Hz.

The assignments of the spectra, the evaluation of triad distribution and the composition were made according to Kakugo ("Carbon-13 NMR determination of monomer sequence distribution in ethylene-propylene copolymers prepared with δ-titanium trichloride-diethylaluminum chloride" M. Kakugo, Y. Naito, K. Mizunuma and T. Miyatake, Macromolecules, 1982, 15, 1150) using the following equations:

$$PPP = 100\ T_{\beta\beta}/S \qquad PPE = 100\ T_{\beta\delta}/S \qquad EPE = 100\ T_{\delta\delta}/S$$

$$PEP = 100\ S_{\beta\beta}/S \qquad PEE = 100\ S_{\beta\delta}/S \qquad EEE = 100\ (0.25\ S_{\gamma\delta} + 0.5\ S_{\delta\delta})/S$$

$$S = T_{\beta\beta} + T_{\beta\delta} + T_{\delta\delta} + S_{\beta\beta} + S_{\beta\delta} + 0.25\ S_{\gamma\delta} + 0.5\ S_{\delta\delta}$$

The molar percentage of ethylene content was evaluated using the following equation:

$$E\%\ mol = 100 * [PEP+PEE+EEE]$$

The weight percentage of ethylene content was evaluated using the following equation:

$$E\%\ wt. = \frac{100 * E\%\ mol * MW_E}{E\%\ mol * MW_E + P\%\ mol * MW_P}$$

where P% mol is the molar percentage of propylene content, while $MW_E$ and $MW_P$ are the molecular weights of ethylene and propylene, respectively.

The product of reactivity ratio $r_1r_2$ was calculated according to Carman (C.J. Carman, R.A. Harrington and C.E. Wilkes, Macromolecules, 1977; 10, 536) as:

$$r_1r_2 = 1 + \left(\frac{EEE + PEE}{PEP} + 1\right) - \left(\frac{P}{E} + 1\right)\left(\frac{EEE + PEE}{PEP} + 1\right)^{0.5}$$

The tacticity of Propylene sequences was calculated as mm content from the ratio of the PPP mm$T_{\beta\beta}$ (28.90-29.65 ppm) and the whole $T_{\beta\beta}$ (29.80-28.37 ppm).

Ethylene C2 content has been measured on the final composition the ethylene content of component B) is than calculated by using the formula $C2tot=X_BC2_B$ wherein $X_B$ is the amount of component B in the composition.

**Molar ratio of feed gasses**

Determined by gas-chromatography

**Melt flow rate (MFR)**

The melt flow rate MFR of the polymer was determined according to ISO 1133 (230°C, 2.16 Kg).

**Intrinsic viscosity**

Determined in tetrahydronaphthalene at 135°C

**-ray diffraction**

X ray spectra have been recorded on compression molded DMTA plaques. In order to minimize the orientation of the crystallites the spectrum has been recorded on a rotating plaque. The calculation of degree of crystallinity has been performed by using two phase model and single line fitting procedure. The degree of crystallinity of the polymer of example 1 has been measured to be 58.0%

**Haze -ASTM D1003-13**

**Gloss - ASTM D2457-13**

**Tensile Modulus on film ASTM D882-02**

**Tear Resistance -ASTM D1004-13**

**Puncture Resistance**

The strength and the deflection needed to punch a film with a prefixed geometry are measured by means of a punch with hemispheric head which pierces the sample at a speed of 20 mm/min.

Instruments:

dynamometer type (INSTRON mod. 4301 or similar) equipped with interchangeable 100 N and IKN cells and interface device with personal computer;
high precision thickness gauge (type Mitutoyo) or similar,
strip chart recorder or data acquisition system through which it is possible to record the stress-deformation curves (or stress-time)
sample rack in plexiglass with a 6 mm diameter-central hole able to bind the sample hyperstatically;
50 mm.-long-punch with a 4 mm.-diameter- hemispheric head.

Test procedure

The films must be conditioned at a temperature of 23 °C for a minimum period of 24 hours and no longer than 48 hours.

A 50 mm-wide and 200 mm.-long strip is cut from the film. The thickness is measured in 5 different points, at least 3 cm apart.

The sample is inserted in the sample rack holder which has a fastner system composed of two shaped plates with a central hole for the punching. The cross bar integral with the punch is placed in such a way that the punch is as near as possible to the film; then the test is started at the prefixed speed and up to the break of the film.

The test is carried out on 5 different points of the sample, at least 3 cm. apart.

From the 5 tests which have been carried out the average values of maximum strength, expressed in (N). Maximum strength: it is the max. value of strength obtained by the film at break.

**Example 1**

Preparation of the solid catalyst

Into a 500 mL four-necked round flask, purged with nitrogen, 250 mL of $TiCl_4$ were introduced at 0 °C. While stirring, 10.0 g of microspheroidal $MgCl_2 \cdot 2.1C_2H_5OH$ having average particle size of 47$\mu$m (prepared in accordance with the method described in example 1 of EP728769, an amount of diethyl 2,3-diisopropylsuccinate in racemic form such as to have a Mg/succinate molar ratio of 24 was added. The temperature was raised to 100°C and kept at this value for 60min. After that the stirring was stopped, the liquid siphoned off and the treatment with TiCl4 was repeated at 110°C for 30 min. After siphoning, fresh $TiCl_4$ and an amount of 9,9-bis(methoxymethyl)fluorene such as to have a Mg/dieter molar ratio of 12 were added. Then the temperature was raised to 90°C for 30min. After sedimentation and siphoning at 85°C the solid was washed six times with anhydrous hexane (6 x 100 ml) at 60 °C.

Polymerization

The polymerization run is carried out in continuous mode in a series of two reactors equipped with devices to transfer the product from one reactor to the one immediately next to it. The first reactor is a liquid phase loop reactor, and the second is a fluidized bed gas-phase reactor. A propylene homopolymer is prepared in the liquid loop reactor while a propylene ethylene copolymer is prepared in the gas-phase reactor in the presence of the propylene homopolymer coming from the first stage. Hydrogen is used as molecular weight regulator. The gas phase (propylene, ethylene and hydrogen) is continuously analyzed via gas-chromatography. At the end of the run the powder is discharged and dried under a nitrogen flow.

The main polymerization conditions and the analytical data relating to the polymers produced in the two reactors are reported in Table 1. Properties of the polymer are reported on Table 2.

Table 1

| PROCESS CONDITIONS | |
|---|---|
| | **Ex. 1** |
| **Precontact** | |
| Temperature °C | 12 |
| Residence time (min) | 20 |
| Teal/donor ratio | 4.3 |
| **Prepolymerization** | |
| Temperature °C | 20 |
| Residence time (min) | 6.5 |
| | |
| **Loop 1st reactor in liquid phase -** propylene homopolymer | |
| Temperature, °C | 75 |
| Pressure, bar | 40 |
| Residence time, min | 53 |
| H2/C3 mol/ppm | 1320 |
| | |
| Split, wt% | 85 |
| **Gas-Phase reactor** - ethylene/propylene copolymerization | |
| Temperature, °C | 70 |
| Pressure, bar | 14 |
| Residence time, min | 18 |
| H2/C3 mol/mol | |
| H2/C2 mol/mol | 0.264 |
| C2/C2+C3 mol/ mol | 0.2 |
| split wt% | 15 |
| C2 ethylene; C3 propylene; H2 hydrogen<br>*Amount of component B with respect to A+B<br>$C_2^-$= ethylene $C_3^-$ = propylene | |

To the material obtained according to example 1 the following additives have been added:

| | | **Ex. 1** |
|---|---|---|
| Polymer composition of the example | wt% | 99.640 |
| Antioxidants | wt% | 0.1725 |
| Calcium stearate | wt% | 0.0575 |
| Millad 3988 | wt% | 0.1300 |

Table 2

| Example | | Ex. 1 |
|---|---|---|
| component A) | | |
| Xylene insolubles at 25°C | % | >96 |
| %copolymer component B) | wt% | 14 |
| %$C_2^-$ component B) | wt% | 35.0 |
| properties of the composition | | |
| MFR of the composition | g/10 min | 3.1 |
| Xylene soluble at 25°C, Xs | wt% | 13.7 |
| XsIV | dl/g | 1.5 |
| relation (I) | | 7.0 |
| $C_2^-$= ethylene<br>XsIV= intrinsic viscosity of fraction soluble in xylene at 25°C<br>n.m.=not measured | | |

**Multilayer film Example 1 and comparative example 2**

The polymer of example 1 has been used to produce a three layers BOPP film having a thickness of 30 µm. For the comparative example 2 a 30 µm A/B/A film wherein layer A is *Adsyl* 7623XCP sold by Lyondellbasell and layer B is the propylene polymer composition of example 1. The ratio among the three layers is 1-28-1. The stretching ration is 5x9 (MDxTD)

The properties of the films are reported in table 3.

Table 3

| | units | Ex 1 | Comp ex 2 |
|---|---|---|---|
| Haze | % | 4 | 5,2 |
| Gloss | GU | 73,7 | 72,8 |
| Tensile Modulus MD | $N/mm^2$ | 1640 | 1550 |
| TEAR RESISTANCE MD | N | 3,7 | 1,9 |
| Puncture resistance Max Force | N | 49 | 18,5 |

The puncture resistance is increased considerably in the film of example 1. Furthermore, also improvement in tensile modulus and tear resistance can be obtained.

**Claims**

**1.** A biaxially oriented polypropylene multilayer film having at least three layers wherein each layer comprises the same nucleated propylene polymer composition; said propylene polymer composition having:

A) from 77 wt% to 91 wt%, of a propylene homopolymer having a fraction insoluble in xylene at 25 °C higher than 95 % (measured as described in the description),

B) from 9 wt % to 23 wt%, of a copolymer of propylene with from 28.0 wt% to 42.0 wt% of ethylene derived units;

the composition having an intrinsic viscosity of (measured as described in the description) the fraction soluble in xylene at 25 °C comprised between 1.0 dl/g and 1.9 dl/g, a fraction soluble in xylene at 25 °C comprised between 9.0 wt% and 21.0 wt%, a total melt flow rate (Melt Flow Rate according to ISO 1133,

condition L, i.e. 230°C and 2.16 kg load) comprised between 1.5 and 5 g/10 min and the value of the relation (I):

$$22.5+0.2*MFR-1.2*Xs+0.2*IV \qquad (I)$$

is higher than 5.9; wherein
MFR is the melt flow rate of the nucleated composition (Melt Flow Rate according to ISO 1133, condition L, i.e. 230°C and 2.16 kg load);
IV is the intrinsic viscosity of the fraction soluble in xylene at 25 °C; and
Xs is the fraction soluble in xylene at 25°C;
wherein the amount of A+B is equal to 100 wt%
and wherein the nucleated agent is selected from the group consisting of aromatic or aliphatic carboxylic acids, aromatic metal phosphates, sorbitol derivatives and talc and wherein the amount of nucleating agent ranges from 300 ppm to 5000 ppm with respect to the total composition.

**2.** The biaxially oriented polypropylene multilayer film according to claim 1 wherein in the nucleated propylene polymer composition component A) is from 80 wt% to 90 wt%, preferably from 83 wt% to 89 wt%, and component B) is from 10 wt% to 20 wt%, preferably from 11 wt% to 17 wt%, wherein the amount of A+B is equal to 100wt%.

**3.** The biaxially oriented polypropylene multilayer film according to claims 1 or 2 wherein in the propylene polymer composition the fraction insoluble in xylene at 25 °C of component A) is higher than 96 wt%.

**4.** The biaxially oriented polypropylene multilayer film according to anyone of claims 1-3 wherein in the propylene polymer composition the ethylene derived units of component B) are from 28.0 wt% to 42.0 wt%, preferably from 31.0 wt% to 39.0 wt%, more preferably from 32.0 wt% to 38.0 wt%.

**5.** The biaxially oriented polypropylene multilayer film according to anyone of claims 1-4 wherein in the propylene polymer composition the intrinsic viscosity of the fraction soluble in xylene at 25 °C is comprised between 1.2 dl/g to 1.7 dl/g.

**6.** The biaxially oriented polypropylene multilayer film according to anyone of claims 1-5 wherein in the propylene polymer composition the fraction soluble in xylene at 25 °C is comprised between 11.0 wt% to 18.0 wt%, preferably from 12.0 wt% to 16.0 wt%.

**7.** The biaxially oriented polypropylene multilayer film according to anyone of claims 1-6 wherein in the propylene polymer composition the total melt flow rate (Melt Flow Rate according to ISO 1133, condition L, i.e. 230°C and 2.16 kg load) is comprised between 2.5 and 4.5 g/10 min.

**8.** The biaxially oriented polypropylene multilayer film according to anyone of claims 1-7 wherein in the propylene polymer composition the value of the relation (I) is comprised between 6.1 and 7.3.

**9.** The biaxially oriented polypropylene multilayer film according to anyone of claims 1-8 wherein in the propylene polymer composition the value of the relation (I) is comprised between 6.4 and 7.2.

**10.** The biaxially oriented polypropylene multilayer film according to anyone of claims 1-9 having three layers.

**11.** The biaxially oriented polypropylene multilayer film according to anyone of claims 1-10 wherein in nucleated propylene polymer composition the nucleating agent is selected from dibenzylidene sorbitol derivatives.

**12.** The biaxially oriented polypropylene multilayer film according to anyone of claims 1-11 wherein in nucleated propylene polymer composition the nucleating agent is 1,3-0-2, 4-bis (3, 4-dimethylbenzylidene) sorbitol (DMDBS).

**13.** The biaxially oriented polypropylene multilayer film according to anyone of claims 1-12 wherein in nucleated propylene polymer composition the amount of nucleating agent ranges from 500 ppm to 3000 ppm with respect to the total composition.

**14.** The biaxially oriented polypropylene multilayer film according to anyone of claims 1-13 wherein in nucleated propylene polymer composition the amount of nucleating agent ranges from 900 ppm to 1500 ppm with respect to the total composition.

## Patentansprüche

1. Biaxial orientierte Polypropylenmehrschichtfolie mit mindestens drei Schichten, wobei jede Schicht die gleiche nukleierte Propylenpolymerzusammensetzung umfasst; wobei die Propylenpolymerzusammensetzung aufweist:

   A) 77 Gew.% bis 91 Gew.% eines Propylenhomopolymers mit einer in Xylol bei 25 °C unlöslichen Fraktion größer als 95 Gew.% (gemessen wie in den technischen Angaben beschrieben);
   B) 9 Gew.% bis 23 Gew.% eines Copolymers von Propylen mit 28,0 Gew.% bis 42,0 Gew.% von Ethylen abgeleiteten Einheiten;
   wobei die Zusammensetzung eine Grenzviskosität (gemessen wie in den technischen Angaben beschrieben) der in Xylol bei 25 °C löslichen Fraktion aufweist, die zwischen 1,0 dl/g und 1,9 dl/g liegt, eine in Xylol bei 25 °C lösliche Fraktion zwischen 9,0 Gew.% und 21,0 Gew.% aufweist, eine Gesamtschmelzflussrate (Schmelzflussrate gemäß ISO 1133, Bedingung L, d. h. 230 °C und 2,16 kg Last) zwischen 1,5 und 5 g/10 min liegt, und der Wert der Beziehung (I):

   $$22{,}5 + 0{,}2*MFR - 1{,}2*Xs + 0{,}2*IV \qquad (I)$$

   größer als 5,9 ist; wobei
   MFR die Schmelzflussrate der nukleierten Zusammensetzung ist (Schmelzflussrate gemäß ISO 1133, Bedingung L, d. h. 230 °C und 2,16 kg Last);
   IV die Grenzviskosität der in Xylol bei 25 °C löslichen Fraktion ist; und
   Xs die in Xylol bei 25 °C lösliche Fraktion ist;
   wobei die Menge von A+B gleich 100 Gew.% ist,
   und wobei das Nukleierungsmittel ausgewählt ist aus der Gruppe bestehend aus aromatischen oder aliphatischen Carbonsäuren, aromatischen Metallphosphaten, Sorbitderivaten und Talkum, und wobei die Menge an Nukleierungsmittel im Bereich von 300 ppm bis 5000 ppm liegt, bezogen auf die Gesamtzusammensetzung.

2. Biaxial orientierte Polypropylenmehrschichtfolie nach Anspruch 1, wobei in der nukleierten Propylenpolymerzusammensetzung Komponente A) 80 Gew.% bis 90 Gew.%, vorzugsweise 83 Gew.% bis 89 Gew.% beträgt, und Komponente B 10 Gew.% bis 20 Gew.%, vorzugsweise 11 Gew.% bis 17 Gew.% beträgt, wobei die Menge von A+B 100 Gew.% beträgt.

3. Biaxial orientierte Polypropylenmehrschichtfolie nach Anspruch 1 oder 2, wobei die in Xylol bei 25 °C unlösliche Fraktion von Komponente A) in dem Propylenpolymer größer als 96 Gew.% ist.

4. Biaxial orientierte Polypropylenmehrschichtfolie nach einem der Ansprüche 1 bis 3, wobei in der Propylenpolymerzusammensetzung die von Ethylen abgeleiteten Einheiten von Komponente B) 28,0 Gew.% bis 42,0 Gew.%, vorzugsweise 31,0 Gew.% bis 39,0 Gew.%, bevorzugter 32,0 Gew.% bis 38,0 Gew.% sind.

5. Biaxial orienterte Polypropylenmehrschichtfolie nach einem der Ansprüche 1 bis 4, wobei in der Propylenpolymerzusammensetzung die Grenzviskosität der in Xylol bei 25 °C löslichen Fraktion zwischen 1,2 dl/g und 1,7 dl/g liegt.

6. Biaxial orientierte Polypropylenmehrschichtfolie nach einem der Ansprüche 1 bis 5, wobei in der Propylenpolymerzusammensetzung die in Xylol bei 25 °C lösliche Fraktion zwischen 11,0 Gew.% und 18,0 Gew.%, vorzugsweise 12,0 Gew.% bis 16,0 Gew.% liegt.

7. Biaxial orientierte Polypropylenmehrschichtfolie nach einem der Ansprüche 1 bis 6, wobei die gesamte Schmelzflussrate in der Propylenpolymerzusammensetzung (Schmelzflussrate gemäß ISO 1133, Bedingung L, d. h. 230 °C und 2,16 kg Last) zwischen 2,5 und 4,5 g/10 min liegt.

8. Biaxial orientierte Polypropylenmehrschichtfolie nach einem der Ansprüche 1 bis 7, wobei in der Propylenpolymerzusammensetzung der Wert der Beziehung (I) zwischen 6,1 und 7,3 liegt.

9. Biaxial orientierte Polypropylenmehrschichtfolie nach einem der Ansprüche 1 bis 8, wobei in der Propylenpolymerzusammensetzung der Wert der Beziehung (I) zwischen 6,4 und 7,2 liegt.

10. Biaxial orientierte Polypropylenmehrschichtfolie nach einem der Ansprüche 1 bis 9 mit drei Schichten.

11. Biaxial orientierte Polypropylenmehrschichtfolie nach einem der Ansprüche 1 bis 10, wobei in der nukleierten Propylenpolymerzusammensetzung das Nukleierungsmittel ausgewählt ist aus Dibenzylidensorbitderivaten.

12. Biaxial orientierte Polypropylenmehrschichtfolie nach einem der Ansprüche 1 bis 11, wobei in der nukleierten Propylenpolymerzusammensetzung das Nukleierungsmittel 1,3-O-2,4-Bis-(3,4-dimethylbenzyliden)sorbit (DMDBS) ist.

13. Biaxial orientierte Polypropylenmehrschichtfolie nach einem der Ansprüche 1 bis 12, wobei in der nukleierten Propylenpolymerzusammensetzung die Menge an Nukleierungsmittel im Bereich von 500 ppm bis 3000 ppm liegt, bezogen auf die gesamte Zusammensetzung.

14. Biaxial orientierte Polypropylenmehrschichtfolie nach einem der Ansprüche 1 bis 13, wobei in der nukleierten Propylenpolymerzusammensetzung die Menge an Nukleierungsmittel im Bereich von 900 ppm bis 1500 ppm liegt, bezogen auf die gesamte Zusammensetzung.

## Revendications

1. Film multicouche à orientation biaxiale de polypropylène présentant au moins trois couches, chaque couche comprenant la même composition nucléée de polymère de propylène ; ladite composition de polymère de propylène présentant :

   A) 77 % en poids à 91 % en poids d'un homopolymère de propylène présentant une fraction insoluble dans le xylène à 25 °C supérieure à 95 % (mesurée comme décrit dans la description),
   B) 9 % en poids à 23 % en poids d'un copolymère de propylène avec 28,0 % en poids à 42,0 % en poids de motifs dérivés d'éthylène ;
   la composition présentant une viscosité intrinsèque (mesurée comme décrit dans la description) de la fraction soluble dans le xylène à 25 °C comprise entre 1,0 dl/g et 1,9 dl/g, une fraction soluble dans le xylène à 25 °C comprise entre 9,0 % en poids et 21,0 % en poids, un indice de fluidité à chaud total (indice de fluidité à chaud selon la norme ISO 1133, condition L, c'est-à-dire 230 °C et une charge de 2,16 kg) compris entre 1,5 et 5 g/10 min et la valeur de la relation (I) :

$$22{,}5+0{,}2*MFR-1{,}2*Xs+0{,}2*IV \qquad (I)$$

   étant supérieure à 5,9 ;
   MFR étant l'indice de fluidité à chaud de la composition nucléée (indice de fluidité à chaud selon la norme ISO 1133, condition L, c'est-à-dire 230 °C et une charge de 2,16 kg) ;
   IV étant la viscosité intrinsèque de la fraction soluble dans le xylène à 25 °C ; et
   Xs étant la fraction soluble dans le xylène à 25 °C ;
   la quantité de A+B étant égale à 100 % en poids
   et l'agent de nucléation étant choisi dans le groupe constitué par les acides carboxyliques aromatiques ou aliphatiques, les phosphates métalliques aromatiques, les dérivés de sorbitol et le talc et la quantité d'agent de nucléation étant située dans la plage de 300 ppm à 5000 ppm par rapport à la composition totale.

2. Film multicouche à orientation biaxiale de polypropylène selon la revendication 1, dans lequel, dans la composition nucléée de polymère de propylène, le constituant A) représente 80 % en poids à 90 % en poids, de préférence 83 % en poids à 89 % en poids, et le constituant B) représente 10 % en poids à 20 % en poids, de préférence 11 % en poids à 17 % en poids, la quantité de A + B étant égale à 100 % en poids.

3. Film multicouche à orientation biaxiale de polypropylène selon la revendication 1 ou 2, dans lequel, dans la composition de polymère de propylène, la fraction insoluble dans le xylène à 25 °C du constituant A) représente plus de 96 % en poids.

4. Film multicouche à orientation biaxiale de polypropylène selon l'une quelconque des revendications 1 à 3, dans lequel, dans la composition de polymère de propylène, les motifs dérivés d'éthylène du constituant B) représentent 28,0 % en poids à 42,0 % en poids, de préférence 31,0 % en poids à 39,0 % en poids, plus préférablement 32,0 % en poids à 38,0 % en poids.

5. Film multicouche à orientation biaxiale de polypropylène selon l'une quelconque des revendications 1 à 4, dans lequel, dans la composition de polymère de propylène, la viscosité intrinsèque de la fraction soluble dans le xylène à 25 °C est comprise entre 1,2 dl/g et 1,7 dl/g.

6. Film multicouche à orientation biaxiale de polypropylène selon l'une quelconque des revendications 1 à 5, dans lequel, dans la composition de polymère de propylène, la fraction soluble dans le xylène à 25 °C est comprise entre 11,0 % en poids à 18,0 % en poids, de préférence de 12,0 % en poids à 16,0 % en poids.

7. Film multicouche à orientation biaxiale de polypropylène selon l'une quelconque des revendications 1 à 6, dans lequel, dans la composition de polymère de propylène, l'indice de fluidité à chaud total (indice de fluidité à chaud selon la norme ISO 1133, condition L, c'est-à-dire 230 °C et une charge de 2,16 kg) est compris entre 2,5 et 4,5 g/10 min.

8. Film multicouche à orientation biaxiale de polypropylène selon l'une quelconque des revendications 1 à 7, dans lequel, dans la composition de polymère de propylène, la valeur de la relation (I) est comprise entre 6,1 et 7,3.

9. Film multicouche à orientation biaxiale de polypropylène selon l'une quelconque des revendications 1 à 8, dans lequel, dans la composition de polymère de propylène, la valeur de la relation (I) est comprise entre 6,4 et 7,2.

10. Film multicouche à orientation biaxiale de polypropylène selon l'une quelconque des revendications 1 à 9, présentant trois couches.

11. Film multicouche à orientation biaxiale de polypropylène selon l'une quelconque des revendications 1 à 10, dans lequel, dans la composition nucléée de polymère de propylène, l'agent de nucléation est choisi parmi des dérivés de dibenzylidène-sorbitol.

12. Film multicouche à orientation biaxiale de polypropylène selon l'une quelconque des revendications 1 à 11, dans lequel, dans la composition nucléée de polymère de propylène, l'agent de nucléation est le 1,3-O-2,4-bis(3,4-diméthylbenzylidène)sorbitol (DMDBS).

13. Film multicouche à orientation biaxiale de polypropylène selon l'une quelconque des revendications 1 à 12, dans lequel, dans la composition nucléée de polymère de propylène, la quantité d'agent de nucléation est située dans la plage de 500 ppm à 3000 ppm par rapport à la composition totale.

14. Film multicouche à orientation biaxiale de polypropylène selon l'une quelconque des revendications 1 à 13, dans lequel, dans la composition nucléée de polymère de propylène, la quantité d'agent de nucléation est située dans la plage de 900 ppm à 1500 ppm par rapport à la composition totale.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2006065664 A
- WO 05014713 A
- EP 45977 A
- EP 361494 A
- EP 728769 A
- EP 1272533 A
- WO 00163261 A
- US 4399054 A
- US 4469648 A
- EP 395083 A
- WO 98144001 A


### Non-patent literature cited in the description


- **C. J. CARMAN ; R. A. HARRINGTON ; C. E. WILKES.** Monomer Sequence Distribution in Ethylene-Propylene Rubber Measured by 13C NMR. 3. Use of Reaction Probability Mode. *Macromolecules,* 1977, vol. 10, 536
- **M. KAKUGO ; Y. NAITO ; K. MIZUNUMA ; T. MIYATAKE.** Carbon-13 NMR determination of monomer sequence distribution in ethylene-propylene copolymers prepared with δ-titanium trichloride-diethylaluminum chloride. *Macromolecules,* 1982, vol. 15, 1150
- **C.J. CARMAN ; R.A. HARRINGTON ; C.E. WILKES.** *Macromolecules,* 1977, vol. 10, 536